# EUROPÄISCHE PATENTSCHRIFT

(11) **EP 3 159 161 B1**
(45) Veröffentlichungstag und Bekanntmachung des Hinweises auf die Patenterteilung: **27.11.2019**
(21) Anmeldenummer: 16194519.1
(22) Anmeldetag: 19.10.2016
(51) Int. Cl.: B32B 27/08, B32B 27/32, B32B 7/02, B32B 27/30, A01F 15/07

(54) **MEHRSCHICHTIGE ELASTISCHE FOLIE**
MULTILAYER ELASTIC FILM
FEUILLE ÉLASTIQUE À PLUSIEURS COUCHES

(30) Priorität: 19.10.2015 AT 508872015
(43) Veröffentlichungstag der Anmeldung: 26.04.2017
(73) Patentinhaber: Coveris Flexibles Austria GmbH, 6336 Langkampfen (AT)
(72) Erfinder: Bolom, Wolfgang, 6235 Reith im Alpbachtal (AT); Vollmer, Jan-Torsten, 83355 Grabenstätt (DE)
(74) Vertreter: Puchberger & Partner Patentanwälte

(56) Entgegenhaltungen:
- EP-A2- 1 238 796
- AU-A1- 2013 369 481

## Beschreibung

Die Erfindung betrifft die Verwendung einer mehrschichtigen elastischen Folie als Netzersatzfolie zum Umwickeln von zur Silageherstellung vorgesehenen landwirtschaftlichen Pflanzenprodukten beim Verpressen dieser Pflanzenprodukte zu Ballen.

In der Landwirtschaft ist es bekannt, für die Silage vorgesehene pflanzliche Produkte beim Verpressen zu Ballen mit Netzen oder Garnen, z.B. aus HDPE oder Polyamid, zu umwickeln und damit diesen Ballen den nötigen Halt und die notwendige Stabilität zu verleihen, bevor diese mit konventionellen Stretchfolien umwickelt werden.

Derartige Stretchfolien sind beispielsweise aus der AU 2013 369 481 A1 bekannt. Die EP 1 238 796 A2 zeigt weitere Kunststofffolien.

Ein Nachteil dieser Netze liegt darin, dass das Auspacken des Inhalts auf Schwierigkeiten stößt, da Reste an den Netzen verbleiben können. Ein weiterer Nachteil besteht in den eingesetzten Materialien, welche ein Problem beim Recycling darstellen können.

Aus diesem Grund wurden in den letzten Jahren Entwicklungen getätigt, um die verwendeten Netze oder Garne durch Kunststofffolien zu ersetzen, welche die notwendige Formstabilisierung ermöglichen. Diese Folien sind unter der Bezeichnung Netzersatzfolien bzw. Mantelfolien bekannt und dienen ausschließlich der Stabilisierung des Ballens, und nicht des luftdichten Verschlusses. Der luftdichte Verschluss wird in bekannter Weise durch Silage-Stretch-Folien erreicht. Diese Folien haben besondere Eigenschaften, die den Effekt mit sich bringen, dass die Fermentation des Silierguts rasch und in der gewünschten Weise erfolgt.
Zur Silageherstellung werden entsprechende pflanzliche Materialien zuerst zu Ballen verpresst und im Zuge dessen mit der Netzersatzfolie umwickelt und der Ballen damit verfestigt, dann wird eine Silagestretchfolie um den Ballen gewickelt.

Eine ähnliche Vorgangsweise findet bei der Umwicklung von Müll Anwendung.

Konventionelle Netzersatzfolien basieren auf Polyethylen-Rezepturen, die im Herstellungsprozess durch den sogenannten MDO-Prozess (Machine Direction Orientation) vorgereckt werden. Dieser Prozess ist erforderlich, um die Steifigkeit der verwendeten Polyethylen-Folien zu erhöhen, da herkömmliche Polyethylenfolien für die Verwendung als Netzersatzfolie zu weich wären.

Ein Nachteil der herkömmlichen Netzersatzfolien besteht darin, dass der MDO-Prozess aufwendig ist und die resultierende Folie eine hohe Spleiß-Neigung in Maschinenrichtung aufweist, bzw. fehlende Rückstellkräfte an der verarbeiteten Folie gegeben sind.

Eine Aufgabe der vorliegenden Erfindung liegt somit darin, eine Folie, die ohne Verwendung des MDO-Prozesses hergestellt werden kann und dennoch die erforderlichen Eigenschaften aufweist, als Netzersatzfolie zu verwenden. Die Folie soll für die notwendige Stabilität des Ballens sorgen. Der so gewickelte Ballen soll anschließend mit den bekannten Silagestretchfolien eingewickelt werden können.

Diese und andere Aufgaben werden erfindungsgemäß durch den Gegenstand des Anspruchs 1 gelöst.

Die einzelnen Schichten können insbesondere jene Polyolefine und/oder deren Blends (Abmischungen) umfassen, welche in den Ansprüchen näher gekennzeichnet sind, nämlich beispielsweise Polyethylen mit Polyisobutylen, Polyethylen/Polypropylen-Blends mit Polyisobutylen, Copolymere des Polyethylen ohne Polyisobutylen, beispielsweise Ethylenvinylacetat, ferner Polypropylen, einen Polyethylen/Polypropylen-Blend oder Copolymere des Polyethylen oder des Polypropylen.

Durch die ausschließliche Nutzung eines einfachen Herstellungsverfahrens ohne Vorreckung, nämlich der Cast- bzw. Blas-Extrusion, wird eine vereinfachte Herstellung der Folie ermöglicht. Die Folie weist durch die mehrlagige Ausführung dennoch vergleichbare Steifigkeit zur MDO-Folie bei gleichzeitig verbessertem Rückstellverhalten auf. Da die Folie nicht vorgereckt wird, weist sie eine reduzierte Spleiß-Neigung in Maschinenrichtung auf.

Ferner ist durch die fehlende Vorreckung eine Dehnfähigkeit gegenüber konventionellen MDO-Netzersatzfolien gegeben, wodurch eine erhöhte Ergiebigkeit beim Umwickeln der Ballen und somit geringerer Folienverbrauch einhergeht.

Der Aufbau der Folie aus einer Kombination von mindestens drei Schichten verleiht der Folie mechanische Eigenschaften, die mit den Anwendungsprofilen der beim Stand der Technik verwendeten, vorgestreckten Folien vergleichbar sind.

Erfindungsgemäß kann vorgesehen sein, dass eine Kernschicht sowie zumindest eine erste Außenschicht und eine zweite Außenschicht vorgesehen sind. Die erste und zweite Außenschicht dient insbesondere als Träger von Gleitschichten und/oder Klebeschichten. Die Kernschicht bestimmt die mechanische Festigkeit der Folie, nämlich die Festigkeit in Längsrichtung, die Dehnfähigkeit und die Rückstellkraft.

Erfindungsgemäß kann vorgesehen sein, dass die erste Außenschicht eine Dicke von 5% - 30%, vorzugsweise 10%, die Kernschicht eine Dicke von 40% - 90%, vorzugsweise 80%, und die zweite Außenschicht eine Dicke von 5% - 30%, vorzugsweise 10%, jeweils bezogen auf die Gesamtdicke der Folie, aufweist.

Erfindungsgemäß kann vorgesehen sein, dass die erste Außenschicht Polyethylen mit Polyisobutylen, einen Polyethylen/ Polypropylen-Blend mit Polyisobutylen, oder Copolymere des Polyethylen ohne Polyisobutylen, beispielsweise Ethylenvinylacetat, umfasst.

Erfindungsgemäß kann weiters vorgesehen sein, dass die zweite Außenschicht Polyethylen mit Polyisobutylen, einen Polyethylen/ Polypropylen-Blend mit Polyisobutylen, oder Copolymere des Polyethylen ohne Polyisobutylen, beispielsweise Ethylenvinylacetat, umfasst.

Erfindungsgemäß kann vorgesehen sein, dass die Kernschicht Polypropylen, einen Polyethylen/Polypropylen-Blend oder Copolymere des Polyethylen oder des Polypropylen umfasst.

Diese erfindungsgemäße Ausführung der einzelnen Schichten der erfindungsgemäßen Folie erlaubt eine Anpassung der Folie in Hinsicht auf ihre Durchstoßfestigkeit und Dehnbarkeit, sodass es erstmals möglich ist, eine Folie mit den vorteilhaften Eigenschaften vorgereckter Folien, jedoch ohne deren Nachteile, zu erzeugen.

Das jeweils verwendete Polyethylen kann vorzugsweise aus der aus VLLDPE, LLDPE, LDPE, HDPE und MDPE bestehenden Gruppe ausgewählt sein. Unter VLLDPE (*very low density polyethylene*) wird Polyethylen sehr niedriger Dichte, unter LLDPE (*linear low density polyethylene*) lineares Polyethylen niedriger Dichte, unter LDPE (*low density polyethylene*) Polyethylen niedriger Dichte, unter HDPE (*high density polyethylene*) Polyethylen hoher Dichte und unter MDPE (*medium density polyethylene*) Polyethylen mittlerer Dichte verstanden.

Erfindungsgemäß kann vorgesehen sein, dass die Kernschicht eine Dichte von über 0,85 g/cm³, bevorzugt etwa 0,905 g/cm³, aufweist.

Erfindungsgemäß kann vorgesehen sein, dass die erste Außenschicht und/oder die zweite Außenschicht als Klebeschicht ausgeführt ist. Es kann ebenso vorgesehen sein, dass die erste Außenschicht und/oder die zweite Außenschicht als Gleitschicht ausgeführt ist. Weiters kann die Folie erfindungsgemäß auf einer Seite eine Gleitschicht und auf der anderen Seite eine Klebeschicht aufweisen.

Die ausgewogene Klebkraft der erfindungsgemäßen Folie stellt zum einen sicher, dass eine ausreichende Festigkeit des Ballens erreicht wird, zum anderen sorgt sie für die problemlose Verarbeitbarkeit der Folie in der Ballenpresse. Die Folie kann innen oder außen haftend oder beidseitig haftend ausgeführt werden.

Gemäß einem weiteren Merkmal der Erfindung kann vorgesehen sein, dass die Gleitschicht aus einem aus LLDPE, MDPE und deren Mischungen ausgewählten Polyethylen besteht.

Gemäß einem weiteren Merkmal der Erfindung kann vorgesehen sein, dass die Klebeschicht aus einem aus VLLDPE, LLDPE und deren Mischungen ausgewählten Polyethylen oder deren Copolymeren besteht.

Erfindungsgemäß kann vorgesehen sein, dass die Folie einen nach DIN EN ISO 527-3/2/100 bestimmten Zug-E-Modul in Längsrichtung von über 450 N/mm² aufweist.

Erfindungsgemäß kann vorgesehen sein, dass die Folie eine nach EN ISO 527-3/2/100 bestimmte Reißfestigkeit in Längsrichtung über 65 N/mm², bevorzugt über 70 N/mm², aufweist und ihre Reißdehnung in Längsrichtung über 650 % ist.

Erfindungsgemäß kann vorgesehen sein, dass die Folie eine nach ISO 527-3 bei einer Messgeschwindigkeit von 100 mm/min bestimmte Streckgrenze in Längsrichtung von 18 N/mm2 bis 19 N/mm2, eine Reißdehnung in Längsrichtung von 570% bis 690%, eine Reißfestigkeit von 74 N/mm2 bis 79 N/mm2, sowie eine nach DIN 53363 bestimmte Weitereißfestigkeit in Längs¬rich-tung von 5 N bis 6N aufweist.

Erfindungsgemäß kann vorgesehen sein, dass die Folie eine Dicke von 10 my bis 150 my, vorzugsweise von 10 my bis 30 my aufweist. Erfindungsgemäß kann vorgesehen sein, dass die Folie eine Breite von 490 mm bis 1700 mm, vorzugsweise von 1200 mm bis 1400 mm aufweist.

Die erfindungsgemäße Folie kann transparent oder eingefärbt, z.B. weiß, hellgrün, feldgrün oder schwarz, sein. Sie kann übliche Zusatzstoffe, wie beispielsweise UV-Stabilisatoren, enthalten.

Erfindungsgemäß kann die Folie im Cast- oder Blasverfahren hergestellt werden. Bei der Herstellung der Folie im Cast-Verfahren kann eine Extrusion vorgesehen sein, bei der durch eine Anpassung der Kühlwalzentemperatur in der Folie Eigenschaften erzielt werden, die denen einer vorgereckten Folie stark ähneln und die die Verarbeitung der Folie in weiterer Folge begünstigen.

Die erfindungsgemäße Folie kann zu unterschiedlichen Zwecken verwendet werden. Erfindungsgemäß ist insbesondere vorgesehen, die Folie zum Umwickeln von Müll beim Verpressen des Müll zu Ballen einzusetzen. Ebenso ist erfindungsgemäß vorgesehen, die Folie zum Umwickeln von zur Silageherstellung vorgesehenen landwirtschaftlichen Pflanzenprodukten beim Verpressen dieser Pflanzenprodukte zu Ballen einzusetzen.

Die zur Silageherstellung vorgesehenen pflanzlichen Materialien oder Produkte können alle gängigen zur Silageherstellung verwendeten sein, beispielsweise Stroh, Heu, Gras, Klee, Luzerne, Ackerbohnen, Hafer, Rübenblätter, Rübenschnitzel, Maiskörner, Maiskolben etc. sowie Mischungen solcher Materialien.

Während der Fermentierung kommt es zur Gasbildung, wodurch das Ballenvolumen expandiert. Die erfindungsgemäße Folie nimmt die Expansionskraft des Ballens auf; sie bleibt leicht gedehnt. Die Außenschichten sorgen für die erforderliche Steifheit und bringt positive mechanische Eigenschaften in Bezug auf Dehnung der Folie mit sich.

Die erfindungsgemäße Folie sorgt aufgrund ganzflächiger Auflage auf dem Ballen für gute Formstabilität. Sie weist ausreichende Festigkeit auf, sodass sie z.B. nicht von Halmen durchstoßen wird. Dadurch ist gewährleistet, dass sie das Ballengut vor Regen, Schnee und anderer Feuchtigkeit schützt, indem sie eine wasser- und nahezu vollständig luftundurchlässige Hülle um den Ballen bildet.

Der mit der erfindungsgemäßen Folie umwickelte Ballen kann anschließend mit einer herkömmlichen Silagestretchfolie umwickelt werden. Da die das herkömmliche Wickelnetz ersetzende erfindungsgemäße Folie bereits eine dichte Hülle um das Siliergut bildet, sind weniger Lagen Silagestretchfolie nötig als beim Stand der Technik, was einen wirtschaftlichen Vorteil darstellt.

Aufgrund der hervorragenden mechanischen Eigenschaften der erfindungsgemäßen Folie ist auch eine Silageherstellung ohne weiteres Umwickeln des mit der erfindungsgemäßen Folie umwickelten Ballens mit Silagestretchfolie denkbar.

Erfindungsgemäß kann vorgesehen sein, dass die Folie eine Dicke von etwa 18 my aufweist, wobei zwei Außenschichten mit einer Dicke von etwa 20% der Gesamtdicke, und eine Kernschicht mit einer Dicke von etwa 60% der Gesamtdicke vorgesehen sind. Die Außenschichten können insbesondere aus einer LLDPE-Mischung bestehen oder diese umfassen. Die Kernschicht kann aus einem Polypropylen-Copolymer, insbesondere Random-Copolymer bestehen oder dieses umfassen. In diesem Fall kann die Streckgrenze der Folie, gemessen nach ISO 527-3 und einer Messgeschwindigkeit von 100 mm/min in Machine Direction (MD, also Längsrichtung), bei einer Dehnung der Folie von 17% etwa 18 N/mm² betragen. Die Reißfestigkeit, also die Zugspannung im Augenblick des Reißens, kann bei einer Reißdehnung in MD von 572% etwa 74 N/mm² betragen. Die Weiterreiß- bzw. Kerbfestigkeit kann in MD etwa 5,2 N betragen.

In einem weiteren Ausführungsbeispiel kann die Folie wiederum eine Dicke von etwa 18 my aufweisen, wobei zwei Außenschichten mit einer Dicke von etwa 20% der Gesamtdicke, und eine Kernschicht mit einer Dicke von etwa 60% der Gesamtdicke vorgesehen sind. Die Außenschichten können in diesem Ausführungsbeispiel aus einer mLLDPE (metallocene LLDPE)-Mischung bestehen oder diese umfassen. Die Kernschicht kann aus einer Polypropylen-Copolymer Mischung bestehen oder diese umfassen. In diesem Fall kann die Streckgrenze der Folie, gemessen nach ISO 527-3 und einer Messgeschwindigkeit von 100 mm/min in Machine Direction (MD), bei einer Dehnung der Folie von 17% etwa 19 N/mm² betragen. Die Reißfestigkeit, also die Zugspannung im Augenblick des Reißens, kann bei einer Reißdehnung in MD von 690% etwa 79 N/mm² betragen. Die Weiterreiß- bzw. Kerbfestigkeit kann in MD etwa 5,9 N betragen.

## Patentansprüche

1. Verwendung einer mehrschichtigen elastischen Folie als Netzersatzfolie zum Umwickeln von Müll oder landwirtschaftlichen Pflanzenprodukten, **dadurch gekennzeichnet, dass** die Folie eine nicht vorgereckte zumindest dreischichtige coextrudierte Folie ist, deren Schichten jeweils Polyolefine und/oder deren Blends umfassen.

2. Verwendung einer Folie nach Anspruch 1, **dadurch gekennzeichnet, dass** eine Kernschicht sowie zumindest eine erste Außenschicht und eine zweite Außenschicht vorgesehen sind.

3. Verwendung einer Folie nach Anspruch 2, **dadurch gekennzeichnet, dass**
a. die erste Außenschicht eine Dicke von 5% - 30%, vorzugsweise 10%,
b. die Kernschicht eine Dicke von 40% - 90%, vorzugsweise 80%,
c. die zweite Außenschicht eine Dicke von 5% - 30%, vorzugsweise 10%, jeweils bezogen auf die Gesamtdicke der Folie, aufweist.

4. Verwendung einer Folie nach Anspruch 2 oder 3, **dadurch gekennzeichnet, dass** die erste Außenschicht Polyethylen mit Polyisobutylen, einen Polyethylen/ Polypropylen-Blend mit Polyisobutylen, oder Copolymere des Polyethylen ohne Polyisobutylen, beispielsweise Ethylenvinylacetat, umfasst.

5. Verwendung einer Folie nach einem der Ansprüche 2 bis 4, **dadurch gekennzeichnet, dass** die zweite Außenschicht Polyethylen mit Polyisobutylen, einen Polyethylen/ Polypropylen-Blend mit Polyisobutylen, oder Copolymere des Polyethylen ohne Polyisobutylen, beispielsweise Ethylenvinylacetat, umfasst.

6. Verwendung einer Folie nach einem der Ansprüche 2 bis 5, **dadurch gekennzeichnet, dass** die Kernschicht Polypropylen, einen Polyethylen/Polypropylen-Blend oder Copolymere des Polyethylen oder des Polypropylen umfasst.

7. Verwendung einer Folie nach einem der Ansprüche 1 bis 6, **dadurch gekennzeichnet, dass** die Kernschicht eine Dichte über 0,85 g/cm³, bevorzugt 0,905 g/cm³, aufweist.

8. Verwendung einer Folie nach einem der Ansprüche 1 bis 7, **dadurch gekennzeichnet, dass** die erste Außenschicht und/oder die zweite Außenschicht als Klebeschicht ausgeführt ist.

9. Verwendung einer Folie nach einem der Ansprüche 1 bis 8, **dadurch gekennzeichnet, dass** die erste Außenschicht und/oder die zweite Außenschicht als Gleitschicht ausgeführt ist.

10. Verwendung einer Folie nach einem der Ansprüche 1 bis 9, **dadurch gekennzeichnet, dass** die Folie einen nach DIN EN ISO 527-3/2/100 bestimmten Zug-E-Modul in Längsrichtung von über 450 N/mm² aufweist.

11. Verwendung einer Folie nach einem der Ansprüche 1 bis 10, **dadurch gekennzeichnet, dass** sie eine nach EN ISO 527-3/2/100 bestimmte Reißfestigkeit in Längsrichtung von über 65 N/mm², bevorzugt über 70 N/mm², aufweist und ihre Reißdehnung in Längsrichtung über 550%, vorzugsweise über 650 % ist.

12. Verwendung einer Folie nach einem der Ansprüche 1 bis 11, **dadurch gekennzeichnet, dass** sie eine nach ISO 527-3 bei einer Messgeschwindigkeit von 100 mm/min bestimmte Streckgrenze in Längsrichtung von 18 N/mm² bis 19 N/mm², eine Reißdehnung in Längsrichtung von 570% bis 690%, eine Reißfestigkeit von 74 N/mm² bis 79 N/mm², sowie eine nach DIN 53363 bestimmte Weitereißfestigkeit in Längsrichtung von 5 N bis 6N aufweist.

13. Verwendung einer Folie nach einem der Ansprüche 1 bis 12, **dadurch gekennzeichnet, dass** sie eine Dicke von 10 my bis 150 my, vorzugsweise von 10 my bis 30 my aufweist.

14. Verwendung einer Folie nach einem der Ansprüche 1 bis 13, **dadurch gekennzeichnet, dass** sie eine Breite von 490 mm bis 1700 mm, vorzugsweise von 1200 mm bis 1400 mm aufweist.

## Claims

1. Use of a multi-layer elastic film as net replacement film for wrapping waste or agricultural plant products, **characterized in that** the film is not pre-stretched and is a co-extruded film with at least three layers, each of which comprises polyolefins and/or blends thereof.

2. The use of a film according to claim 1, **characterized in that** it comprises a core layer and at least one first outer layer and one second outer layer.

3. The use of a film according to claim 2, **characterized in that**
a. the first outer layer has a thickness of 5 % - 30 %, preferably 10 %.
b. the core layer has a thickness of 40 % - 90 %, preferably 80 %,
c. the second outer layer has a thickness of 5 % - 30 %, preferably 10 %, based in each case on the total thickness of the film.

4. The use of a film according to claim 2 or 3, **characterized in that** the first outer layer comprises polyethylene with polyisobutylene, a polyethylene/polypropylene blend with polyisobutylene, or copolymers of the polyethylene without polyisobutylene, for example ethylene-vinyl acetate.

5. The use of a film according to one of claims 2 to 4, **characterized in that** the second outer layer comprises polyethylene with polyisobutylene, a polyethylene/polypropylene blend with polyisobutylene, or copolymers of the polyethylene without polyisobutylene, for example ethylene-vinyl acetate.

6. The use of a film according to one of claims 2 to 5, **characterized in that** the core layer comprises polypropylene, a polyethylene/polypropylene blend or copolymers of the polyethylene or the polypropylene.

7. The use of a film according to one of claims 1 to 6, **characterized in that** the core layer has a density of more than 0.85 g/cm³, preferably 0.905 g/cm³.

8. The use of a film according to one of claims 1 to 7, **characterized in that** the first outer layer and/or the second outer layer are configured as an adhesive layer.

9. The use of a film according to one of claims 1 to 8, **characterized in that** the first outer layer and/or the second outer layer are configured as an antifriction layer.

10. The use of a film according to one of claims 1 to 9, **characterized in that** the film has a tensile modulus of elasticity determined in accordance with DIN EN ISO 527-3/2/100 of more than 450 N/mm² in the longitudinal direction.

11. The use of a film according to one of claims 1 to 10, **characterized in that** it has a tear resistance determined in accordance with DIN EN ISO 527-3/2/100 of more than 65 N/mm², preferably more than 70 N/mm², in the longitudinal direction, and that it has an elongation at break of more than 550 %, preferably more than 650 %, in the longitudinal direction.

12. The use of a film according to one of claims 1 to 11, **characterized in that** it has a yield strength determined in accordance with ISO 527-3 at a measuring speed of 100 mm/min of 18 N/mm² to 19 N/mm² in the longitudinal direction, an elongation at break of 570 % to 690 % in the longitudinal direction, a tear resistance of 74 N/mm² to 79 N/mm² as well as a resistance to further tearing determined in accordance with DIN 53363 of 5 N to 6 N in the longitudinal direction.

13. The use of a film according to one of claims 1 to 12, **characterized in that** it has a thickness of 10 my to 150 my, preferably 10 my to 30 my.

14. The use of a film according to one of claims 1 to 13, **characterized in that** it has a width of 490 mm to 1700 mm, preferably 1200 mm to 1400 mm.

## Revendications

1. Utilisation d'un film élastique multicouche comme film de remplacement de filet pour envelopper des déchets ou des produits végétaux agricoles, **caractérisée en ce que** le film est un film coextrudé non étiré à au moins trois couches dont chacune des couches comprend des polyoléfines et/ou leurs mélanges.

2. Utilisation d'un film selon la revendication 1, **caractérisée en ce qu'**une couche centrale et au moins une première couche extérieure et une seconde couche extérieure sont prévues.

3. Utilisation d'un film selon la revendication 2, **caractérisée en ce que**
a. la première couche extérieure a une épaisseur de 5 à 30 %, de préférence de 10 %,
b. la couche centrale a une épaisseur de 40 à 90 %, de préférence de 80 %,
c. la deuxième couche extérieure a une épaisseur de 5 à 30 %, de préférence de 10 %,
dans chaque cas en fonction de l'épaisseur totale du film.

4. Utilisation d'un film selon la revendication 2 ou 3, **caractérisée en ce que** la première couche extérieure comprend du polyéthylène avec du polyisobutylène, un mélange de polyéthylène/polypropylène avec du polyisobutylène, ou des copolymères du polyéthylène sans polyisobutylène, par exemple de l'éthylène-acétate de vinyle.

5. Utilisation d'un film selon l'une quelconque des revendications 2 à 4, **caractérisée en ce que** la seconde couche extérieure comprend du polyéthylène avec du polyisobutylène, un mélange de polyéthylène/polypropylène avec du polyisobutylène, ou des copolymères du polyéthylène sans polyisobutylène, par exemple de l'éthylène-acétate de vinyle.

6. Utilisation d'un film selon l'une quelconque des revendications 2 à 5, **caractérisée en ce que** la couche centrale comprend du polypropylène, un mélange de polyéthylène/polypropylène ou des copolymères du polyéthylène ou du polypropylène.

7. Utilisation d'un film selon l'une quelconque des revendications 1 à 6, **caractérisée en ce que** la couche centrale a une densité supérieure à 0,85 g/cm³, de préférence 0,905 g/cm³.

8. Utilisation d'un film selon l'une quelconque des revendications 1 à 7, **caractérisée en ce que** la première couche extérieure et/ou la seconde couche extérieure est formée comme couche adhésive.

9. Utilisation d'un film selon l'une quelconque des revendications 1 à 8, **caractérisée en ce que** la première couche extérieure et/ou la seconde couche extérieure est formée comme couche glissante.

10. Utilisation d'un film selon l'une quelconque des revendications 1 à 9, **caractérisée en ce que** le film présente un module d'élasticité en traction, déterminé selon DIN EN ISO 527-3/2/100, dans le sens longitudinal supérieur à 450 N/mm².

11. Utilisation d'un film selon l'une quelconque des revendications 1 à 10, **caractérisée en ce qu'**il présente une résistance à la rupture, déterminée selon EN ISO 527-3/2/100, dans le sens longitudinal supérieure à 65 N/mm², de préférence supérieure à 70 N/mm², et son allongement à la rupture dans le sens longitudinal est supérieur à 550 %, de préférence supérieur à 650 %.

12. Utilisation d'un film selon l'une quelconque des revendications 1 à 11, **caractérisée en ce qu'**il présente une limite d'élasticité, déterminée selon ISO 527-3 à une vitesse de mesure de 100 mm/min, dans le sens longitudinal de 18 N/mm² à 19 N/mm², un allongement de rupture dans le sens longitudinal de 570 % à 690 %, une résistance à la rupture de 74 N/mm² à 79 N/mm² et une résistance à la propagation de déchirement, déterminée selon la DIN 53363, dans le sens longitudinal de 5 N à 6 N.

13. Utilisation d'un film selon l'une quelconque des revendications 1 à 12, **caractérisée en ce qu'**il a une épaisseur de 10 my à 150 my, de préférence de 10 my à 30 my.

14. Utilisation d'un film selon l'une quelconque des revendications 1 à 13, **caractérisée en ce qu'**il a une largeur de 490 mm à 1700 mm, de préférence de 1200 mm à 1400 mm.
